# FASCICULE DE BREVET EUROPEEN

(11) **EP 3 727 792 B1**
(45) Date de publication et mention de la délivrance du brevet: **17.11.2021**
(21) Numéro de dépôt: 18833689.5
(22) Date de dépôt: 12.12.2018
(51) Int. Cl.: B29C 49/28, B29B 17/00, B29C 48/40, B29C 48/405, B29C 49/00, B29C 49/06, B29K 67/00, B29L 31/00

(54) **PRODUCTION DE RECIPIENTS AVEC RECYCLAGE PAR EXTRUDEUSE BIVIS**
HERSTELLUNG VON BEHÄLTERN MIT RECYCLING DURCH EINEN DOPPELSCHNECKENEXTRUDER
PRODUCTION OF CONTAINERS WITH RECYCLING BY TWIN-SCREW EXTRUDER

(30) Priorité: 22.12.2017 FR 1762976
(43) Date de publication de la demande: 28.10.2020
(73) Titulaire: Sidel Participations, 76930 Octeville-sur-Mer (FR)
(72) Inventeur: DUCLOS, Yves-Alban, 76930 Octeville-sur-mer (FR)
(74) Mandataire: Sidel Group
(86) Numéro de dépôt international: PCT/FR2018/053226
(87) Numéro de publication internationale: WO 2019/122609

(56) Documents cités:
- EP-A1- 2 585 273
- EP-B1- 2 585 273
- DE-A1- 10 050 295
- FR-A1- 2 564 374
- US-A1- 2006 284 334
- US-B1- 6 745 492

## Description

L'invention a trait à la fabrication de récipients en matière plastique par l'intermédiaire d'une extrudeuse.

Pour fabriquer par exemple des bouteilles, il est connu de procéder en discontinu, via un moulage par soufflage, qui est un procédé de mise en forme par moulage de matériaux polymères thermoplastiques, tel que du polyéthylène téréphtalate (PET). Des procédés selon l'état de la technique sont décrits dans les documents US6745492B1, FR2564374A1 et DE10050295A1.

Le processus comprend deux phases :
- à partir de la matière plastique fluide retenue, on forme une ébauche, typiquement un tube, extrudé en plastique ;
- puis, dans un moule de soufflage, on injecte un gaz comprimé (tel de l'air) à l'intérieur de l'ébauche formée, préalablement chauffée. La matière s'étire, vient se plaquer contre l'empreinte et épouse sa forme.

Après refroidissement, le moule s'ouvre et la pièce est éjectée.

Il est aujourd'hui connu, pour fabriquer, par l'intermédiaire d'une extrudeuse, des objets creux, tels que des récipients, en matière plastique:
- de doser des quantités respectives de matière plastique vierge et d'additifs, pour obtenir un mélange dosé,
- d'alimenter l'extrudeuse au moins avec le mélange dosé, pour obtenir un mélange extrudé,
- de mouler le mélange extrudé, pour obtenir des ébauches moulées,
- de chauffer les ébauches moulées, en vue de les souffler,
- de souffler les ébauches chauffées, pour les transformer en objets creux,
- entre certaines au moins des étapes successives de moulage, chauffage et soufflage, de contrôler la qualité des ébauches moulées et/ou des ébauches chauffées et/ou des objets creux soufflés,
- si un seuil prédéfini de qualité est atteint, de passer à l'étape suivante, sinon de recycler vers l'extrudeuse une partie au moins des ébauches moulées et/ou des ébauches chauffées et/ou des objets creux soufflés, après les avoir broyés.

La qualité du PET est généralement mesurée par deux indicateurs :
- le taux d'acétaldéhyde (AA) : Le procédé de fusion et de transformation en phase fondue, génère de l'acétaldéhyde dans le PET. L' est un résidu néfaste pour la production d'emballage de boisons, L'acétaldéhyde donne un goût (jus de pomme) à la boisson. L'acétaldéhyde est lié aux réactions d'oxydation, d'où la nécessité de réaliser la synthèse en absence d'air, ou d'hydrolyse, d'où la nécessité de séchage de la matière première. Le taux d'acétaldéhyde croît très rapidement avec la température ou avec le temps de séjour dans les machines à l'état fondu : 0,5 dans les conditions normales, 4 après 1 minute à 280 °C.
- l'indice de Viscosité (IV) : L'IV est un indice caractérisant les propriétés mécaniques du PET. Plus l'indice est élevé, plus la longueur des chaines du polymère est longue et meilleures sont ses propriétés mécaniques ; malheureusement plus il est alors cher et difficile à travailler.

A titre d'exemple, l'indice de Viscosité pour l'eau : 0.74 à 0.78 dl/g (pour réduire la génération d'acétaldéhyde), et celui pour CSD : 0.82 à 0.86 dl/g (pour une bonne tenue de la bouteille à la pression des boissons).

En outre, les procédés de fusion et de transformation en phase fondue dégradent cet indice, et une trop forte dégradation rend l'utilisation du PET inapte à son utilisation finale.

Par ailleurs, il s'avère qu'en pratique l'utilisation d'une extrudeuse est difficilement compatible avec une production de qualité et à cadence industrielle de d'objets creux à mouler et souffler, tels que des bouteilles en PET.

Un problème vient de la difficile compatibilité entre :
- la nécessité d'un fonctionnement en continu de l'extrudeuse, lié en particulier à un maintien d'une température sensiblement constante de la matière plastique dans l'extrudeuse,
- et des arrêts fréquents qui surviennent sur la ligne de production, par exemple liés à un engorgement ou un défaut sur un dispositif de la ligne.

Dans sa version la plus courante, monovis, le principe de base de l'extrusion est l'utilisation d'une unique vis sans fin, qui tourne à l'intérieur d'un fourreau cylindrique. La matière plastique apportée passe au travers d'une filière. Les fonctions principales du procédé sont alors d'assurer la fusion du polymère solide, puis la mise en pression et le mélange du polymère fondu, afin d'alimenter la filière.

Or, il est d'une part quasi impossible de supprimer par anticipation tous ces arrêts alors que, d'autre part, l'extrusion demeure une technique performante de préparation de la matière à apporter à la ligne de production, dès lors que, par un convoyage avec fusion et mise en pression du polymère initialement fourni, un extrudeuse permet, si le fonctionnement est bon, d'obtenir à la sortie de la machine un débit régulier, avec un matériau homogène, à une température contrôlée et dans conditions de débit importante, avec une consommation énergétique relativement imitée.

C'est dans ce contexte, et pour favoriser donc la compatibilité opérationnelle entre une extrudeuse amont et une ligne aval de production à cadence industrielle de récipients à mouler et souffler, tels que des bouteille en PET, qu'il est ici proposé que l'extrudeuse po
ur plastique, que l'on alimente donc au moins avec le mélange dosé précité et vers laquelle on recycle une partie au moins des ébauches moulées et/ou des ébauches moulées chauffées et/ou des récipients soufflés mentionnés ci-avant, soit une extrudeuse à double vis (dite bivis), de préférence corotatives.

Le choix de bivis corotatives favorisera les débits (ligne grande cadence), un caractère autonettoyant (pas de matériau thermoplastique - PET- stagnant dans l'extrudeuse), et un bon mélange (uniformisation du matériau thermoplastique -PET- et des additifs). Le temps de séjour est relativement long ; mais des dispositifs additionnels peuvent corriger le problème que cela peut générer (par exemple via une pompe à vide, voir ci-après).

Ainsi, au lieu d'une extrusion par une seule vis, la matière va être convoyé par deux vis, généralement parallèles, tournant à l'intérieur d'un fourreau dont la section a la forme d'un huit.

Au bénéfice des extrudeuses bivis par rapport aux monovis, il a déjà été noté par le passé :
- une capacité de mélange accrue du fait de l'interpénétration des vis et de la diversité d'éléments de vis disponibles (contre-filets, disques malaxeurs, etc.) qui permettent un meilleur contrôle du degré de cisaillement/mélange en termes d'intensité et de qualité,
- une flexibilité accrue des procédés du fait de l'indépendance du débit et de la vitesse des vis et de la capacité à gérer plusieurs fonctions process en série (fusion, mélange, cuisson, dégazage, refroidissement, etc.) dans une seule extrudeuse,
- une meilleure maîtrise des paramètres process: une plus faible dispersion des temps de séjour, des taux de cisaillement et de la déformation, un meilleur échauffement par friction, un contrôle plus précis des profils de température dans l'extrudeuse et des apports d'énergie mécanique
- une productivité process potentiellement plus favorable grâce à l'effet pompe positive des vis, à la possibilité de gérer une plus large gamme de matières premières et de formulations, à l'effet de compensation de l'usure des vis par l'ajustement de la vitesse de vis,
- des rendements économiques et un potentiel commercial plus élevés en raison d'une plus grande flexibilité et d'une meilleure productivité des procédés qui permettent de fabriquer une gamme plus large de produits finis, de transformer des matières premières plus variées.

Au-delà de ces arguments qui ont initialement invités à s'intéresser à ce type d'extrudeuse, il s'est avéré, de façon surprenante mais analyses et essais à l'appui, qu'associer une extrudeuse bivis de préférence corotatives à une ligne de production de récipients par moulage puis soufflage d'ébauches chauffées entretemps, permet de résoudre de façon efficace, pérenne et économique des problèmes de soufflage rencontrés en ligne que l'on supposait liés à d'autres causes propres au soufflage (temps de cycle, cadences, pressions..).

A ce sujet, l'un des intérêts d'une combinaison moulage-soufflage est un gain d'énergie lié au chauffe des ébauches qui sortent chaudes du moulage et peuvent ainsi être directement soufflées, via un léger conditionnement thermique.

Or, il est apparu qu'une partie au moins des problèmes de soufflage provenaient en réalité de variations de qualité des ébauches moulées. Notamment des variations de poids ont été identifiées comme causes.

Nouvelles investigations menées, il a été constaté qu'en cas de phases transitoires de production impliquant des démarrages et arrêts successifs assez fréquents, des variations de la température de fusion de la matière plastique convoyée étant générées, en moyenne et en distribution, ces variations induisent des variations de qualité des ébauches, en poids notamment.

A masses différentes, les ébauches sont moulées légèrement différemment, de là des différences de traitement lors du soufflage et dans les récipients obtenus, ceci pouvant conduire à des taux de rebuts excessifs.

Notamment du fait de sa maîtrise précitée des paramètres process, l'utilisation d'une extrudeuse bivis de préférence corotatives est donc apparue comme une solution intéressante, ce que des essais ultérieurs ont confirmé.

Dans ce cas, le filet de l'une des vis pénètrera plus ou moins profondément dans le chenal de la vis voisine.

Un autre problème pris en compte a été celui lié aux conditions actuelles de recyclage des produits mis au rebut.

En effet, les processus connus de fabrication de récipients par moulage et soufflage, tels que les bouteilles en PET, éjectent les articles impropres pour les recycler vers l'extrudeuse (monovis habituellement) selon un schéma compliqué: Les ébauches et les récipients fabriqués de mauvaise qualité sont récupérés et broyés, puis les copeaux sont introduits dans une seconde extrudeuse et une filière à granulés. Les granulés sont cristallisés pour pouvoir être ensuite recyclés sur la ligne de production, via la première extrudeuse. Typiquement, ils repassent dans le doseur initial, pour être dosés avec la matière plastique vierge et les additifs, en vue de l'obtention dudit mélange dosé destiné à l'extrudeuse.

En outre, avant d'être (ré)extrudés à proprement parlé, les granulés cristallisés de la ligne de recyclage sont typiquement préchauffés dans une machine dédiée, puis acheminés par une seconde vis d'alimentation mécanique vers deux trémies, pour y être séchés à l'air chaud. Ce n'est qu'ensuite que le plastique est déposé à l'entrée du doseur.

Selon l'humidité du PET, la durée du séchage est de 2h à 6h. Un séchage réduit la concentration d'acétaldéhyde initial. Or, il a été découvert que l'humidité et l'utilisation d'une monovis étaient générateurs d'acétaldéhyde.

Ainsi, avec une extrudeuse monovis, les étapes précitées sont requises, car nécessaires pour limiter la génération d'acétaldéhyde. Mais, par ailleurs les sécheurs n'acceptent pas les copeaux de matière plastique (PET en particulier) non cristallisés, au risque sinon de produire un agglomérat de granulés.

Utiliser une extrudeuse bivis de préférence corotatives évite ces problèmes et contraintes, dans la mesure où il est ici proposé favorablement de recycler directement vers l'extrudeuse à double vis une partie au moins des ébauches moulées et/ou des ébauches chauffées et/ou des objets creux soufflés, sans passer par ladite étape de dosage ni une autre extrudeuse.

L'extrudeuse bivis accepte en outre tous les états du PET sans risque de disfonctionnement, et pour un résultat similaire : PET cristallisé, PET amorphe, PET bi-orienté, en particulier.

De plus, il est possible d'y introduire du PET avec de l'humidité et sans faire appel à une atmosphère inerte (tel de l'azote), Les réactions de génération d'acétaldéhyde seront si nécessaire inhibées par l'utilisation d'une pompe à vide raccordée au fourreau de la bivis : les évents. Ces pompes à vides permettront de supprimer l'air, en particulier l'oxygène. Elles permettront aussi de supprimer l'eau, beaucoup plus rapidement que les sécheurs, en abaissant la pression d'évaporation et en élevant la température.

En conséquence, sans prendre de précautions sur la qualité du PET en entrée, Le PET fondu aura la même qualité que dans le cadre de l'utilisation d'une extrudeuse monovis dans de bonnes conditions (chute de l'indice de Viscosité de -0.02dl/g et un taux d'acétaldéhyde : 1ppm)

Le recyclage des déchets de préformes et de récipients (bouteilles par exemple) pourra générer une chute de I' l'indice de Viscosité: -0.08dl/g. Ces déchets pourront être mélangés suivant un dosage de 10% de matière recyclée pour 90% de matière vierge afin de revenir à une chute de I' l'indice de Viscosité de 0.02dl/g).

Les dispositifs de pompage sur l'extrudeuse pourront participer à l'évacuation de l'acétaldéhyde pendant le travail en fusion du PET, grâce aux moyens, de préférence conjugués, du vide, de la température et du malaxage du PET (pour maximiser la surface de diffusion de l'acétaldéhyde).

Si comme fréquemment les articles recyclés (ébauches ou objets creux soufflés) comprennent des additifs dans leur composition, le fait de les recycler en copeaux en entrée de l'extrudeuse bivis n'aura pas d'influence sur le dosage opéré sur la matière vierge, puisque le circuit de recyclage débouche en aval du doseur.

En outre, il a été constaté qu'un tel recyclage avec une extrudeuse bivis limite notablement les problèmes de dégradation de la matière, d'autant que l'extrudeuse bivis elle-même dégrade moins cette matière que lorsqu'une extrudeuse monovis est dans la ligne.

Il est aussi proposé, pour recycler une partie au moins de ces ébauches et/ou objets creux soufflés :
- de broyer lesdites ébauches et/ou objets creux à recycler, pour obtenir un broyât, qui pourra être en copeaux,
- puis, avant d'alimenter l'extrudeuse à double vis avec le broyât, de stocker le broyat dans (au moins) un silo tampon et de doser les débits respectifs d'alimentation de l'extrudeuse en broyat issus du silo tampon et en dit mélange dosé.

Le silo agira comme une zone tampon servant à stoker puis libérer au maximum les broyats, à la quantité requise dans l'extrudeuse bivis, alors que la ligne est arrêtée, et donc l'alimentation de l'extrudeuse stoppée. La matière plastique recyclée sera ainsi diluée dans le mélange vierge et dosée, sans nécessité de la ligne de recyclage précitée, ni passage préalable dans le doseur d'entrée, alors réservé au seul mélange vierge.

Tout ce qui précède pourra en outre s'appliquer, en tout ou partie, à une situation de production et de conditionnement de récipients, où :
- on fabriquera ces récipients comme le sont, comme expliqué ci-avant, les corps creux,
- puis, concernant les récipients non recyclés, on les récupèrera et on réalisera avec eux ou sur eux l'une au moins des opérations suivantes : remplissage, bouchage, étiquetage, paquetage,
- avec bien sûr une utilisation initiale de l'extrudeuse à double vis précitée.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 montre les (principales) étapes d'une fabrication puis d'un conditionnement de récipients selon une solution conforme à l'invention (traits pleins) et à l'art antérieur (traits pointillés, avec extrudeuse monovis) ;
- la figure 2 est une vue schématique d'une extrudeuse bivis suivie d'une machine de moulage d'ébauches par de la matière issue de l'extrudeuse bivis ;

- la figure 3 est une vue de détail schématisant les vis de l'extrudeuse de la figure 2 (coupe III-III);
- la figure 4 est un arraché à l'emplacement IV de la machine de moulage d'ébauches schématisée figure 2 ;
- la figure 5 est un détail de l'emplacement V de la figure 4 schématisant une ébauche, en particulier une préforme de bouteille, ainsi produite ;
- la figure 6 montre en coupe locale VI de la figure 4 une partie de l'intérieur de la machine de moulage de cette figure, au niveau d'un moule en luimême ;
- et la figure 7 schématise un four de chauffage d'ébauches issues de la machine de moulage de la figure 2, le four étant suivi d'une machine de moulage par soufflage de récipients à partir des ébauches ainsi (pré)chauffées.

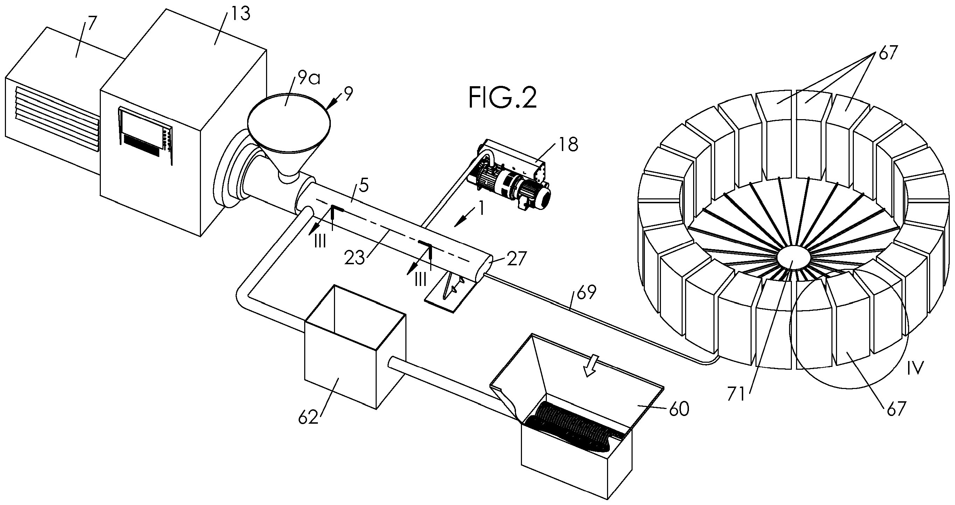

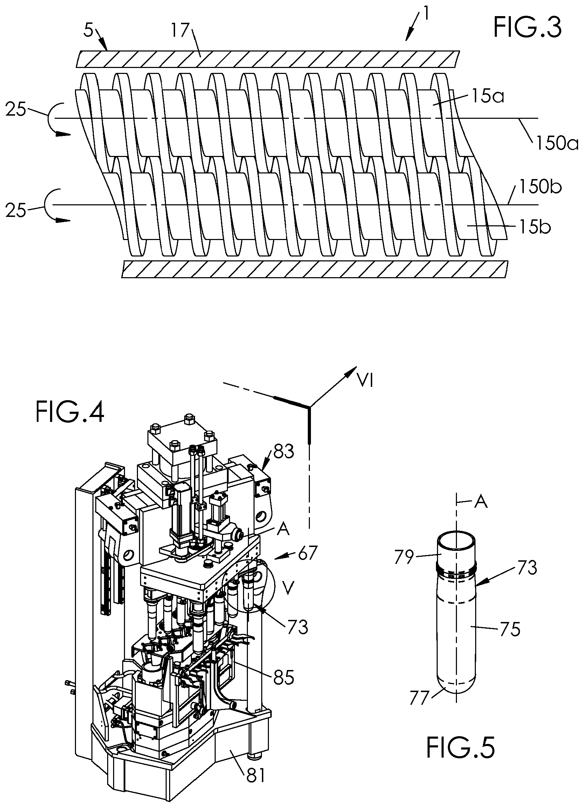

Les figures 2 et 3 sont donc illustratives d'une extrudeuse bivis.

Dans l'exemple d'extrudeuse bivis 1 présentée, on trouve assemblées sur un châssis unique les parties suivantes (figure 2) :
- un ensemble 5 vis-fourreau avec ses accessoires de chauffage et de refroidissement;
- un groupe 7 d'entraînement comprenant un ensemble pouvant comprendre un réducteur, un diviseur de couple et un limiteur, et un moteur principal ;
- des dispositifs 9 pour l'alimentation en matière (trémie doseuse en particulier) ou pour son traitement (par exemple, dispositif de dégazage) ;
- et, pour la conduite de l'extrudeuse, une armoire de pilotage 13 qui réunit les variateurs des moteurs, les organes de démarrage et de sécurité, les dispositifs de régulation, de commande, d'affichage et de mesure.

Le châssis peut être un simple support des organes ci-dessus ; mais il peut également comporter un dispositif d'ouverture du fourreau permettant d'accéder aux vis pour nettoyage, inspection ou maintenance.

L'ensemble vis-fourreau (15a,15b,17 figure 3) constitue la partie active et assure le traitement de la matière, c'est-à-dire l'extrusion. Le fourreau 17 en constitue l'enveloppe extérieure. Les matières à traiter, ainsi que les éventuels additifs, tels des charges, y sont introduits par un orifice d'alimentation principal (9a sur les dispositifs 9 d'alimentation à trémie doseuse figure 2) et éventuellement des orifices secondaires, grâce à des dispositifs doseurs pour les solides ou des pompes pour les liquides. Le fourreau est régulé en température par l'association d'un chauffage, en général électrique, via des éléments chauffants échelonnés le long de l'axe longitudinal 23 de la machine parallèlement auquel s'étendent les deux axes parallèles des deux vis 15a, 15b (figure 3).

Les éléments chauffants sont pilotés par des sondes de contrôle de température, avec un dispositif de refroidissement, typiquement à circulation d'eau.

À l'intérieur du fourreau 17 tournent donc les deux vis parallèles 15a, 15b (figure 3) qui avalent la matière et la font progresser.

D'autres dispositifs de mise en forme peuvent aussi être utilisés.

L'entraînement des vis 15a, 15b s'opère par une boîte d'engrenages, accouplée aux vis dans une lanterne de séparation. Cette boîte peut assurer la réduction de vitesse, la répartition du couple entre les deux vis et la reprise des efforts axiaux de poussée des vis.

Les réactions de génération d'acétaldéhyde seront si nécessaire inhibées par l'utilisation d'une pompe à vide 18 raccordée à l'intérieur du fourreau 17 de la bivis 15a,15b. La pompe à vide 18 permet d'y supprimer l'air, en particulier l'oxygène. Elle permet aussi de supprimer l'eau qui peut être contenue dans la matière apportée dans la bivis, en y abaissant la pression d'évaporation et en y élevant la température.

Le groupe 7 d'entraînement notamment un moteur électrique d'entraînement est typiquement à vitesse variable, à courant continu ou à variation de fréquence, et lié à la boîte d'engrenages par l'intermédiaire d'un accouplement de sécurité à limiteur de couple.

Compte tenu de l'application recherchée, et surtout des avantages attendus (voir ci-avant) on recommande ici l'utilisation d'une extrudeuse bivis à vis corotatives interpénétrées, comme schématisé figure 3.

Les deux vis tournent dans un même sens 25 autour des axes parallèles 150a,150b respectifs et les filets de l'une pénètrent dans les filets de l'autre. Ce qui est schématisé ne vise pas à représenter la réalité.

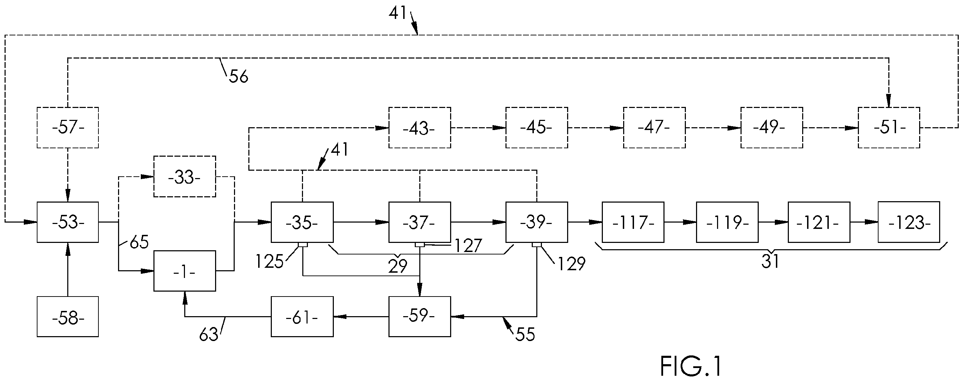

Une telle extrudeuse va permettre de fournir en continu la matière plastique à la ligne 29 de production ou formage des récipients, voire ensuite à la ligne 31 de conditionnement des récipients formés, comme schématisé figure 1 qui montre donc deux cas de figures : en traits pointillés une solution de l'art antérieur où une extrudeuse monovis 33 est utilisée, et en traits pleins une solution exploitable avec une extrudeuse bivis 1, conformément à l'invention, étant précisé que la ligne 29 de production des récipients est commune aux deux solutions.

En effet, et même si l'on y revient plus loin dans la description, la ligne 29 de production comprend dans les deux cas, successivement, une étape 35 de moulage de préformes, une étape 37 de chauffage de ces préformes moulées et une étape 39 de moulage par soufflage des préformes ainsi chauffées, pour obtenir les récipients attendus.

On peut concevoir qu'à certaines au moins, voire chacune, de ces étapes il peut y avoir des rebuts que l'on va alors recycler vers l'extrudeuse 1,33 concernée, étant précisé que le terme préforme ou ébauche couvre ici tant une préforme comme présentée en liaison avec la figure 5 qu'un récipient intermédiaire ayant déjà subi une opération de préformage par exemple en forme proche d'une bouteille.

De la même manière, même si la présente description se réfère souvent à des récipients, notamment des bouteilles, tout corps creux obtenu à partir d'une ébauche et par (au moins) un soufflage est concerné.

On a par ailleurs supposé ici des cas d'utilisation, et donc de recyclage, de polyéthylène téréphtalate (PET) ou polypropylène (PP), en tant que matière plastique, même si d'autres matières plastiques pourraient être utilisées.

Dans la solution de l'art antérieur, la ligne 41 de recyclage (pointillés) comprend successivement une étape 43 de broyage des préformes ou des récipients formés, une étape 45 de passage dans une seconde extrudeuse monovis, une étape 47 de granulation de la matière extrudée à l'étape 45, une étape 49 de cristallisation de la matière granulée et une étape 51 de séchage de la matière granulée cristallisée, après quoi la matière cristallisée séchée est introduite dans le doseur 53 qui, suivant le cas, correspond à celui de l'extrudeuse monovis 33 (art antérieur) ou à le dispositif 9 d'alimentation à trémie doseuse d'entrée de l'extrudeuse bivis 1 dans la solution de l'invention exploitable avec une telle extrudeuse. Dans l'appareil de séchage de l'étape 51, on peut compléter le mélange par de la matière plastique vierge 57, via la ligne

Bien entendu, on aura compris que la figure 1 illustre une vue de l'esprit dans le sens où les solutions de l'invention, avec extrudeuse bivis, et de l'art antérieur, avec extrudeuse monovis, ne sont prévues pour coexister avec une même ligne 29 de production, voire de conditionnement 31, de même pour les lignes de recyclage: 41 suivant l'art antérieur (pointillés), 55 suivant l'invention (traits pleins). On rencontrera soit la solution de l'art antérieur, soit une solution conforme à l'invention.

Dans le doseur 53, situé juste en amont ou en entrée de l'extrudeuse concernée, on amène typiquement de la matière plastique vierge 57 et des additifs 58, tels que des colorants ou des charges modifiant certaines propriétés initiales de la matière, etc...

Dans la solution de l'art antérieur, on y amène donc aussi la matière recyclée issue de la ligne 41.

Ceci est un inconvénient, car il faut alors de nouveau doser les proportions de ces constituants avant d'en alimenter l'extrudeuse monovis 33. En, outre, on a vu que, le recyclage selon l'art antérieur requiert de nombreuses étapes, y compris un séchage (typiquement à l'air chaud) de les granulés cristallisés, le tout étant nécessaire pour limiter la génération d'acétaldéhyde, les sécheurs n'acceptant pas les copeaux plastiques non cristallisés, au risque sinon de produire un agglomérat de granulés.

La solution à extrudeuse bivis corotatives évite notamment ces problèmes et contraintes, puisque la ligne de recyclage 55, qui peut recevoir de la matière à recycler issue de tout ou partie des étapes 35 de moulage de préformes, 37 de chauffage de ces préformes moulées et/ou étape 39 de moulage par soufflage des préformes ainsi chauffées pour les transformer en récipients, comprend une étape de broyage 59, voire ensuite une étape 61 de passage, dans un silo, du broyat issu du broyage 59.

L'étape de broyage 59 pourra être conduite dans un broyeur connu 60 où le broyat pourra consister en des copeaux ou paillettes de PET (voir figure 2).

Quant à l'étape 61 de passage en silo(s), elle pourra consister à faire passer le broyat précité dans un ou plusieurs silos d'homogénéisation 62 qui vont brasser la matière au fur et à mesure des apports. La matière pourra alors être acheminée vers un ou plusieurs silos de contrôle qualité. En fonction du résultat, les copeaux ou paillettes de PET seront stockées dans le silo d'alimentation de l'extrudeuse 1.

Et c'est au niveau de l'entrée 9a du dispositif 9 d'alimentation à trémie que l'on pourra alors ajuster les quantités ou débits respectifs d'alimentation de l'extrudeuse bivis, en broyats 63 d'un côté et en dit mélange « vierge » dosé 65 de l'autre.

Outre qu'elle évite ainsi la ligne 41 de recyclage précitée, y compris un passage préalable dans le doseur d'entrée 53, maintenant réservé au seul mélange vierge puisque le PET broyés est déjà prédosé en additifs 58, l'extrudeuse 1 à deux vis corotatives va permettre un malaxage intime du broyat recyclé (paillettes ou copeaux entre eux) et du mélange « vierge » dosé 65.

L'extrudeuse 1 bivis va assurer un transport de la matière plastique par l'effet du déplacement positif des vis interpénétrées, qui agissent comme une pompe à engrenage. Le transport solide peut se faire en l'absence d'un remplissage complet des chenaux des vis. Un intérêt est de d'obtenir un meilleur découplage entre deux paramètres de réglage de l'extrudeuse que sont la température de sortie de la matière et le débit massique d'alimentation (égal à la vitesse de rotation des vis).

Une autre spécificité est la rapidité du mécanisme de fusion que vont permettre cette extrudeuse. Quelques centimètres peuvent suffire pour passer du granulé solide à une matière totalement fondue. Dans un système co-rotatif, comme ici conseillé, on va en outre pouvoir obtenir une forte capacité de mélange intime, donc limiter les problèmes de dégradation de la matière (l'indice de Viscosité et le taux d'acétaldéhyde) On va maintenant présenter brièvement en quoi pourront consister les étapes 35, 37, 39, puis celles de la ligne 31 de conditionnement des récipients formés.

Une unité 67 de moulage de préformes 73 schématise figure 4 la mise en œuvre de l'étape 35 de moulage.

La sortie 27 de l'extrudeuse 1 bi-vis communique avec un conduit 69 de raccordement de l'extrudeuse à une entrée d'un joint 71 tournant, qui assure la distribution de la matière issue de l'extrudeuse vers donc une série de machines ou unités 67 de moulage dont seule l'une a été représentée figure 4.

Chaque préforme 73 creuse à y mouler pourra en particulier, comme montré figure 5, comprendre un corps 75 creux sensiblement cylindrique de révolution autour d'un axe A, fermé par un dôme 77 par exemple hémisphérique, et pourvu d'un col 79 ouvert dans le prolongement du corps, à l'opposé du dôme. Le col 79 se termine par une surface annulaire définissant un buvant pour le récipient qui sera formé à partir de la préforme 73.

Chaque unité 67 de moulage comprend un bâti 81 par lequel l'unité est montée sur la structure porteuse d'un carrousel 83 et un porte-moule 85.

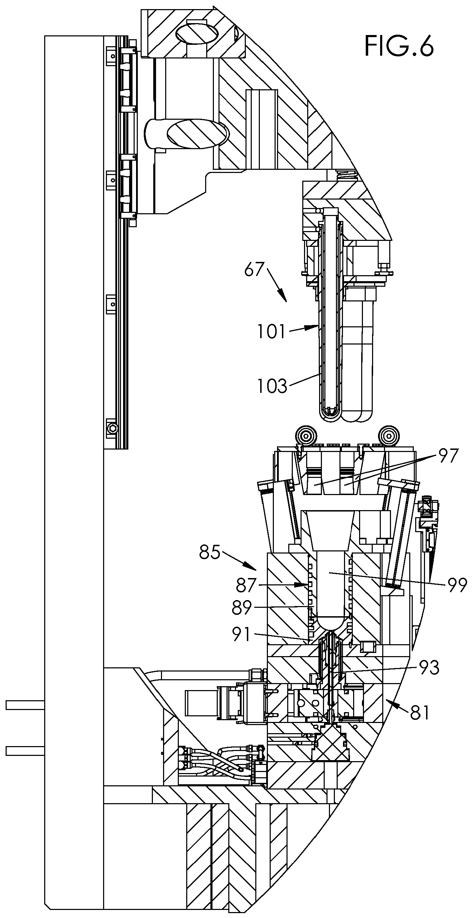

Comme montré figure 6, le porte-moule 85 comprend au moins un, et a priori plusieurs, corps 87 de moule ayant une paroi 89 latérale cylindrique et un fond 91 qui définissent ensemble une cavité à l'empreinte d'une face externe du corps 75 de la préforme, ainsi qu'un système 93 d'injection de la matière dans chaque corps 87 de moule.

Le porte-moule comprend par ailleurs des tiroirs, chacun monté mobile par rapport au porte-moule entre une position de démoulage dans laquelle la (ou chaque) demi-bague 97 est écartée de la cavité 99 du corps de moule correspondant, et une position de moulage dans laquelle la (ou chaque) demi-bague 97 est logée dans cette cavité.

L'unité 67 de moulage comprend aussi un équipage mobile incluant un chariot monté déplaçable par rapport au bâti 81, et un porte-noyaux 101 monté sur le chariot en étant mobile en rotation par rapport à celui-ci. Le porte-noyaux 101 porte au moins une paire de noyaux écartés l'un de l'autre, chacun à l'empreinte d'une face interne du corps 75 d'une préforme 73.

Le chariot précité est monté en translation par rapport au bâti entre :
- une position de moulage dans laquelle chaque noyau, tel 103, est logé dans un corps 87 de moule,
- et une position de démoulage, décalée axialement (comme figure 6) par rapport à la position de moulage, et dans laquelle le noyau est écarté axialement du corps de moule.

Les préformes 73 à produire vont ainsi pouvoir être obtenues par injection d'une matière plastique (telle qu'ici du PET) dans le moule à l'empreinte de la préforme formée par le corps 87 de moule et le noyau 103. La matière est injectée entre le corps de moule et le noyau, lequel est ensuite retiré pour permettre l'éjection de la préforme (figure 6). Cette technique est décrite dans la demande de brevet européen EP 2 585273.

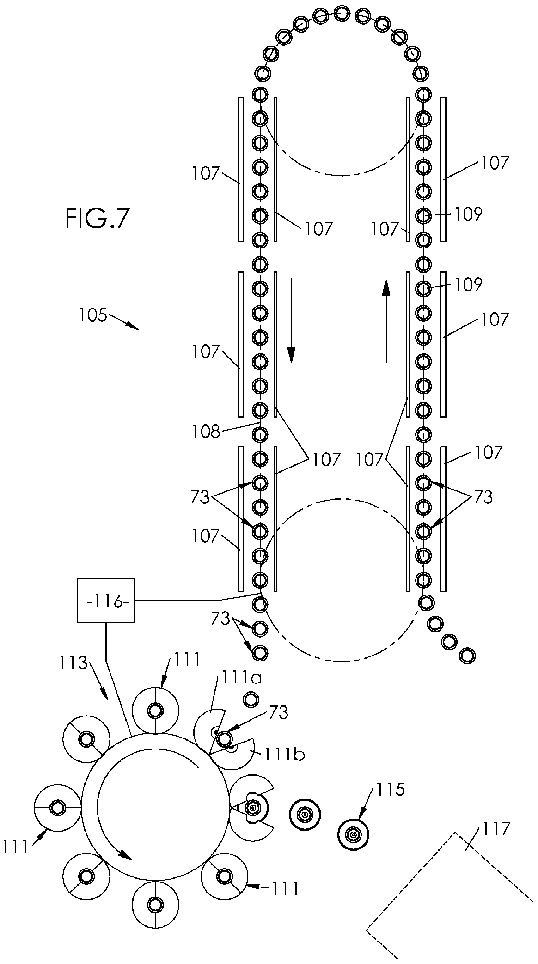

Sortant de la ou des machines ou unités 67 de moulage, les préformes 73 ou ébauches vont entrer, immédiatement ou pas, dans un four 105 qui peut être celui schématisé en haut de la figure 7 et où ces ébauches vont être chauffées à une température supérieure à la température de transition vitreuse de la matière (environ 80°C dans le cas du PET). Les ébauches y défilent devant une rangée de sources 107 de chauffage par exemple par rayonnement infrarouge, accrochées à des supports tournants ou « tournettes » montées sur une chaîne 108 entraînée en rotation. Chaque tournette est entraînée en rotation autour d'un axe 109.

C'est dans ce four 105 que va se dérouler le chauffage des préformes moulées.

Quant à l'étape 39 de moulage par soufflage des préformes ainsi chauffées, elle va s'opérer dans un moule 111 d'une machine de moulage ou soufflage 113 qui peut être celle schématisée en bas de la figure 7.

Dans chaque moule 111, on va injecter un gaz comprimé (tel de l'air) à l'intérieur de chaque ébauche chaude formée : la matière va alors s'étirer, venir se plaquer contre l'empreinte et épouser sa forme.

Après refroidissement, le moule s'ouvre et la pièce moulée 115, correspondant au récipient attendu, est éjectée.

Dans chaque moule 111 concerné, les préformes 73 vont subir un soufflage ou un étirage soufflage, avec un possible pré-soufflage, lors duquel un fluide sous pression (généralement un gaz, ordinairement de l'air) va être injecté dans la préforme chaude, pour lui conférer la forme finale du récipient, ou objet creux, 115.

Comme illustré figure 7, un moule de soufflage peut comprendre deux parties 111a,111b mobiles l'une par rapport à l'autre, de façon habituellement linéaire ou en portefeuille (solution schématisée), entre deux positions respectivement fermée, autour d'une préforme, et ouverte, pour laisser une préforme entrer ou sortir. En position fermée, chaque cavité définie par les deux parties de moulage forme l'empreinte du récipient 115 final.

Il est à noter que, dans chaque moule 111, la préforme 73 ou l'ébauche chargée pourra subir :
- soit un soufflage la transformant dans le récipient 115 final,
- soit un étirage-soufflage qui est typiquement un étirage de l'ébauche, avant soufflage, par insertion axial d'une tige creuse d'élongation à l'intérieur de l'ébauche en prenant appui contre le fond de l'ébauche, de manière à faciliter l'allongement axial de cette ébauche,
- avec dans les deux cas un possible pré-soufflage pendant lequel on souffle dans les ébauches à une première pression à la pression de soufflage.

Une unité informatique 116 contrôle et coordonne notamment les mouvements et déplacements dans le four 105 et la machine de moulage ou soufflage 113.

Une fois ainsi fabriqués les récipients 115 pourront être, à nouveau directement ou non, transférés vers la ligne 31 de conditionnement (figure 1).

Typiquement, cette ligne 31 comprendra, en aval donc de la machine 113, une unité 117 de remplissage (ou remplisseuse), associée à une unité 119 de bouchage, et/ou éventuellement une unité 121 d'étiquetage et/ou une unité 123 de paquetage (par exemple une fardeleuse).

Si elles existent :
- l'unité 117 de remplissage (ou remplisseuse) reçoit des récipients 115 et les remplit. Elle peut inclure une unité de rinçage des récipients 115 avant remplissage, qui est munie de bras injectant une solution de rinçage, par exemple chlorée, dans les récipients pour leur lavage et aussi leur désinfection. L'eau de rinçage est recueillie dans un bac de récupération ;
- l'unité 119 de bouchage pose et ferme des bouchons sur des récipients 115 remplis,
- l'unité 121 d'étiquetage place et colle des étiquettes sur le corps de récipients 115 possiblement préalablement remplis et bouchés, et
- l'unité 123 de paquetage regroupe une série de récipients 115 possiblement préalablement remplis et bouchés et/ou d'étiquetés et les solidarise ensemble, avec un lien qui typiquement les enrobe et les serre, tel qu'un film thermo-rétractable.

Solution apportée, on comprend finalement :
- que la production de l'extrudeuse 1 bivis en termes de quantité de matière, qualité de matière (homogénéité et plasticité notamment) et régularité de la production influe sur les qualité et quantité d'ébauches sortant du four 105 et donc sur celles des récipients 115 formés en sortie de la machine 113,
- mais aussi que simplifier et faciliter le recyclage des rebuts issus des machines ou unités 67, 105,113 aura aussi son importance sur ces critères, ne serait-ce qu'en accélérant ce recyclage par suppression notamment de l'exigence de séchage de copeaux ou broyats cristallisés (pour le PET au moins).

Comme noté ci-avant, il est donc prévu qu'entre certaines au moins des étapes successives de moulage 35, chauffage 37 et soufflage 39, donc sur les machines respectivement 67,105 et 113, on contrôle la qualité des ébauches respectivement moulées, moulées chauffées et des corps creux ou récipients soufflés, de façon à définir s'il convient de les recycler dans le circuit 55, ou de les considérer comme aptes à l'emploi.

Ceci est connu et schématisé figure 1 par les unités de contrôle respectivement 125,127 et 129.

Pour ces contrôles, on pourra par exemple détecter par rayons et/ou pesée:
- en sortie de chaque moule de l'unité 67, l'équilibre de l'ébauche,
- en sortie du four 105, le profil d'épaisseur des ébauches, voire par capteur leur température,
- et en sortie du moule de soufflage 113, l'équilibre des corps ou récipients 115 formés.

Dans chaque cas un seuil de qualité minimum par critère (forme, poids...) aura été prédéfini et entré en mémoire de l'unité informatique 116 qui pilote aussi ces unités de contrôle de la ligne 29.

Si le seuil concerné est atteint, l'objet passera à l'étape suivante de production et/ou de conditionnement. Sinon des systèmes automatisés a priori aussi pilotés par l'unité informatique 116 extrairont de la chaîne ou ligne concernée les rebuts pour un recyclage vers l'extrudeuse 1 bivis, via le circuit 55, de l'objet 73,115 défectueux, à l'étape considérée (35,37 ou 39).

## Revendications

1. Procédé pour fabriquer des objets creux en matière plastique par l'intermédiaire d'une extrudeuse, le procédé comprenant des étapes où :
- on dose des quantités respectives de matière plastique vierge et d'additifs, pour obtenir un mélange dosé,
- on alimente l'extrudeuse (1) au moins avec le mélange dosé, pour obtenir un mélange extrudé,
- on moule le mélange extrudé, pour obtenir des ébauches (73) moulées,
- on chauffe les ébauches moulées, en vue de les souffler,
- on souffle les ébauches chauffées, pour les transformer en objets creux,
- entre certaines au moins des étapes successives de moulage, chauffage et soufflage, on contrôle la qualité des ébauches moulées et/ou des ébauches (73) chauffées et/ou des objets creux soufflés (115),
- si un seuil prédéfini de qualité est atteint, on passe à l'étape suivante, sinon on recycle vers l'extrudeuse (1) une partie au moins des ébauches moulées et/ou des ébauches chauffées et/ou des objets creux soufflés, après les avoir broyés,
**caractérisé en ce que** l'extrudeuse (1) que l'on alimente au moins avec le mélange dosé et vers laquelle on recycle une partie au moins des ébauches (73) moulées et/ou des ébauches chauffées et/ou des objets creux soufflés (115) est une extrudeuse à double vis.

2. Procédé selon la revendication 1, pour produire et conditionner les objets creux, lesquels sont des récipients en matière plastique, le procédé comprenant en outre une étape où : on récupère les récipients et on réalise avec eux ou sur eux l'une au moins des opérations suivantes : remplissage, bouchage, étiquetage, paquetage.

3. Procédé selon la revendication 1 ou 2, où l'extrudeuse à double vis (1) que l'on utilise est une extrudeuse bivis corotative interpénétrée.

4. Procédé selon l'une des revendications précédentes, où on recycle une partie au moins des ébauches moulées et/ou des ébauches moulées chauffées et/ou des récipients ou corps creux soufflés (115) directement vers l'extrudeuse à double vis (1), sans passer par ladite étape de dosage (53) ni une autre extrudeuse.

5. Procédé selon l'une des revendications précédentes où, pour recycler une partie au moins des ébauches moulées et/ou des ébauches chauffées et/ou des récipients ou objets creux soufflés :
- on broye lesdites ébauches moulées et/ou ébauches chauffées et/ou récipients ou objets creux soufflés à recycler, pour obtenir un broyât,
- puis, avant d'alimenter l'extrudeuse à double vis avec le broyât, on stocke le broyat dans au moins un silo tampon (61) et on dose les débits respectifs d'alimentation de l'extrudeuse en broyat issu du silo tampon et en dit mélange dosé (65).

## Patentansprüche

1. Verfahren zum Herstellen von hohlen Gegenständen aus Kunststoff mittels eines Extruders, wobei das Verfahren Schritte umfasst, bei denen:
- jeweilige Mengen von frischem Kunststoff und Zusatzstoffen dosiert werden, um ein dosiertes Gemisch zu erhalten,
- der Extruder (1) mindestens mit dem dosierten Gemisch beschickt wird, um ein extrudiertes Gemisch zu erhalten,
- das extrudierte Gemisch geformt wird, um geformte Vorformlinge (73) zu erhalten,
- die geformten Vorformlinge erwärmt werden, um sie aufzublasen,
- die erwärmten Vorformlinge aufgeblasen werden, um sie zu hohlen Gegenständen umzuformen,
- zwischen mindestens einigen der aufeinander folgenden Schritte des Formens, Erwärmens und Aufblasens die Qualität der geformten Vorformlinge und/oder der erwärmten Vorformlinge (73) und/oder der aufgeblasenen hohlen Gegenstände (115) kontrolliert wird,
- wenn ein vorgegebener Qualitätsschwellenwert erreicht ist, zum folgenden Schritt übergegangen wird, ansonsten mindestens ein Teil der geformten Vorformlinge und/oder der erwärmten Vorformlinge und/oder der aufgeblasenen hohlen Gegenstände zum Extruder (1) hin recycelt wird, nachdem sie zerkleinert wurden,
**dadurch gekennzeichnet, dass** der Extruder (1), der mindestens mit dem dosierten Gemisch beschickt wird und zu dem mindestens ein Teil der geformten Vorformlinge (73) und/oder der erwärmten Vorformlinge und/oder der aufgeblasenen hohlen Gegenstände (115) recycelt wird, ein Doppelschneckenextruder ist.

2. Verfahren nach Anspruch 1 zum Herstellen und Konditionieren von hohlen Gegenständen, die Behälter aus Kunststoff sind, wobei das Verfahren ferner einen Schritt umfasst, bei dem: die Behälter zurückgeführt werden und mit ihnen oder an ihnen mindestens einer der folgenden Vorgänge ausgeführt wird: Befüllen, Verschließen, Etikettieren, Paketieren.

3. Verfahren nach Anspruch 1 oder 2, bei dem der Doppelschneckenextruder (1), der verwendet wird, ein dichtkämmender gleichlaufender Doppelschneckenextruder ist.

4. Verfahren nach einem der vorhergehenden Ansprüche, bei dem mindestens ein Teil der geformten Vorformlinge und/oder der erwärmten geformten Vorformlinge und/oder der Behälter oder aufgeblasenen hohlen Gegenstände (115) direkt zum Doppelschneckenextruder (1) hin recycelt wird, ohne den Dosierschritt (53) oder einen anderen Extruder zu durchlaufen.

5. Verfahren nach einem der vorhergehenden Ansprüche, bei dem, um mindestens einen Teil der geformten Vorformlinge und/oder der erwärmten Vorformlinge und/oder der Behälter oder aufgeblasenen hohlen Gegenstände zu recyceln:
- die zu recycelnden geformten Vorformlinge und/oder erwärmten Vorformlinge und/oder Behälter oder aufgeblasenen hohlen Gegenstände zerkleinert werden, um ein Zerkleinerungsgut zu erhalten,
- dann, vor dem Beschicken des Doppelschneckenextruders mit dem Zerkleinerungsgut, das Zerkleinerungsgut in mindestens einem Puffersilo (61) gelagert wird und die jeweiligen Beschickungsvolumenströme des Extruders an Zerkleinerungsgut aus dem Puffersilo und an dosiertem Gemisch (65) dosiert werden.

## Claims

1. Method for manufacturing hollow objects made of plastics material by way of an extruder, the method comprising steps in which:
- respective quantities of virgin plastics material and additives are metered in order to obtain a metered mixture,
- the extruder (1) is fed at least with the metered mixture in order to obtain an extruded mixture,
- the extruded mixture is moulded in order to obtain moulded blanks (73),
- the moulded blanks are heated so that they can be blow-moulded,
- the heated blanks are blow-moulded in order to convert them into hollow objects,
- between at least some of the successive steps of moulding, heating and blow-moulding, the quality of the moulded blanks and/or of the heated blanks (73) and/or of the blow-moulded hollow objects (115) is checked,
- if a predefined quality threshold has been reached, the method passes to the next step, and if not, at least a part of the moulded blanks and/or of the heated blanks and/or of the blow-moulded hollow objects is recycled to the extruder (1), after they have been ground,
**characterized in that** the extruder (1) that is fed at least with the metered mixture and to which at least a part of the moulded blanks (73) and/or of the heated blanks and/or of the blow-moulded hollow objects (115) is recycled is a twin-screw extruder.

2. Method according to Claim 1, for producing and conditioning hollow objects, which are containers made of plastics material, the method also comprising a step in which: the containers are collected and at least one of the following operations is carried out therewith or thereon: filling, capping, labelling, bundling.

3. Method according to Claim 1 or 2, wherein the twin-screw extruder (1) that is used is an interpenetrating corotating twin-screw extruder.

4. Method according to one of the preceding claims, wherein at least a part of the moulded blanks and/or of the heated moulded blanks and/or of the blow-moulded containers or hollow objects (115) is recycled directly to the twin-screw extruder (1) without passing through said metering step (53) or another extruder.

5. Method according to one of the preceding claims, wherein, in order to recycle at least a part of the moulded blanks and/or of the heated blanks and/or of the blow-moulded containers or hollow objects:
- said moulded blanks and/or heated blanks and/or blow-moulded containers or hollow objects to be recycled are ground in order to obtain ground material,
- then, before the twin-screw extruder is fed with the ground material, the ground material is stored in at least one buffer silo (61) and ground material from the buffer silo and said metered mixture (65) are metered into the respective feed flows of the extruder.
